# EUROPEAN PATENT APPLICATION

(11) **EP 1 516 853 A1**
(43) Date of publication of application: **23.03.2005**
(21) Application number: 03725779.7
(22) Date of filing: 15.05.2003
(51) Int. Cl.: C01B 3/10, C01B 3/06

(54) **METHOD FOR PRODUCING HYDROGEN AND APPARATUS FOR SUPPLYING HYDROGEN**

(30) Priority: 26.06.2002 JP 2002185563
(71) Applicant: Uchiya Thermostat Co., Ltd., Misato-shi, Saitama-ken 341-0037 (JP); Otsuka, Kiyoshi, Toda-shi, saitama-ken 335-0025 (JP)
(72) Inventor: OTSUKA, Kiyoshi, Toda-shi, Saitama 335-0025 (JP); TAKENAKA, Sakae, Ota-ku, Tokyo 144-0045 (JP); NAKAMURA, Kiyozumi, Misato-shi, Saitama 341-0037 (JP); IIZUKA, Kazuyuki, Misato-shi, Saitama 341-0037 (JP)
(74) Representative: von Hellfeld, Axel, Dr.
(86) International application number: PCT/JP2003/006050
(87) International publication number: WO 2004/002881

(57) **Abstract**

A method for producing hydrogen by contacting water, steam or gas containing steam with iron or iron oxide, wherein the iron or iron oxide is added with at least one metal of Rh, Ir, Ru, Pd, Pt and Os and at least one metal of Ti, Zr, V, Nb, Cr, Mo, Al, Ga, Mg, Sc, Ni and Cu. The method provides a medium for producing hydrogen which is capable of producing hydrogen at relatively low temperature and at a great generation rate, is free from the decrease of activity, and is resistance to repeated oxidation and reduction, which leads to the decomposition of water and production of hydrogen with good efficiency.

## Description

### TECHNIICAL FIELD

The present invention relates to technology for efficiently producing hydrogen by decomposing water.

### TECHNIICAL FIELD

Partial oxidation or steam reforming method using petroleum or natural gas as raw material emits a huge quantity of carbon dioxide upon hydrogen synthesis. UT-3 cycle and a method disclosed in Japanese Patent Application Laid-open No. Hei 07-267601 using solar thermal power have been proposed as methods wherein no carbon dioxide is emitted. However, these methods require a large system upon using solar thermal power, and accordingly, require a large cost.

In place of high pressure gas cylinder, use of hydrogen absorbing alloy have been variously proposed as means for safely storing and transporting hydrogen. However, there is a problem that hydrogen absorption in hydrogen absorbing alloy requires high hydrogen pressure, that under the condition wherein hydrogen is absorbed in hydrogen absorbing alloy, it cannot be used in the air and steam atmosphere, and that it require a large cost.

Further, in case of fuel cells wherein hydrogen and air are used as raw materials, method for supplying hydrogen by way of steam reforming of methanol or gasoline is generally used and many inventions have been proposed. However, in either proposed methods, generation of carbon monoxide and that of carbon dioxide take place simultaneously, and especially, carbon monoxide requires a device for decreasing its concentration to a value lower than 10 ppm so as to avoid poisoning of electrodes of fuel cells, and accordingly, the cost is extremely high.

Steam iron method is known as a method for producing hydrogen from water. In this method, oxidation and reduction of only iron, i.e., Fe→ FeO(Fe₃O₄) → Fe, is used in the reaction. The reaction requires a high temperature, for example higher than 600°C , and so-called sintering wherein metal iron gathers occurs after repetition of oxidation and reduction, and there is a problem that activities of metal iron decreases in a short time. Accordingly, medium for producing hydrogen, i.e., oxidation and reduction material, which is free from sintering phenomenon, which has durability and which shows high activities, is requested.

Taking the above-described conventional problems into consideration, in the previously filed Japanese Patent Application No. 2001-102845, the inventor of the present application proposed a method for producing hydrogen wherein specified medium for producing hydrogen, i.e., oxidation and reduction material, is used, by which medium hydrogen producing reacting rate is high, activities of which medium are not decreased, and which medium is durable against repetition of oxidation and reduction. More specifically, a method for producing hydrogen involves contacting water, steam or gas containing steam with iron or iron oxide, wherein the iron or iron oxide is added with at least one metal of Ti, Zr, V, Nb, Cr, Mo, Al, Ga, Mg, Sc, Ni and Cu whereby hydrogen is produced efficiently.

An object of the present invention is to provide a method wherein hydrogen is produced by decomposing water more efficiently than a conventional method for producing hydrogen from water, or wherein hydrogen can be produced at a temperature lower than that used in a conventional method, and the present invention provides a method for producing hydrogen taking the invention proposed in the above-described Japanese Patent Application No. 2001-102845 into consideration.

### DISCLOSURE OF THE INVENTION

According to the present invention, as defined in claim 1, the above-described object is achieved by method for producing hydrogen by contacting water, steam or gas containing steam with iron or iron oxide, wherein the iron or iron oxide is added with at least one metal of Rh, Ir, Ru, Pd, Pt and Os.

Further, as defined in claim 2, the above-described object is achieved by method for producing hydrogen by contacting water, steam or gas containing steam with iron or iron oxide, wherein the iron or iron oxide is added with at least one metal of Rh, Ir, Ru, Pd, Pt and Os and at least one metal of Ti, Zr, V, Nb, Cr, Mo, Al, Ga, Mg, Sc, Ni and Cu.

In the present invention, water used as a raw material may be not necessarily pure water and may be such water as from water-supply or industrial water.

Iron used as a raw material in the present invention may be malleable iron, or a iron compound such as iron oxide, iron nitrate, iron chloride or iron sulfate.

Further, the first metal added to iron or iron oxide in the present invention is at least one of the platinum group, and it is preferred that at least one of Rh, Ir, Ru, Pd, Pt and Os is selected.

In addition, in the present invention, the metal added to iron or iron oxide is at least one of the platinum group, and as the second metal, at least one metal of Ti, Zr, V, Nb, Cr, Mo, Al, Ga, Mg, Sc, Ni and Cu may be added.

It is preferred that the amount of the metal of the platinum group added to iron or iron oxide, measured in molarity of the metallic atom, is prepared between 0.1 and 30 mol % of all the metallic atoms, and more preferably, between 0.5 and 15 mol %.

Either the first added metal, i.e., metal of the platinum group, or the second added metal does not achieve increase of hydrogen producing efficiency when the added amount is less than 0.1 mol %, and decreases oxidation and reduction efficiency when the added amount is more than 30 mol %.

The method for adding metal may be physical mixing or impregnating method, and preferably, coprecipitation method. In order to efficiently use the prepared iron compound, it is formed in a shape having large surface suitable for reaction, such as a pellet, cylinder, honey-comb shape, or non-woven fabric, and is used in decomposing reaction of water.

The iron compound is placed in a reaction vessel and is reduced for example by hydrogen. Water, steam or gas containing steam is made in contact with the reduced iron compound, and hydrogen is produced. In this occasion, iron reacted with water becomes iron oxide. The oxidation and reduction reaction may be carried out at a temperature lower than 600 °C.

According to the present invention, hydrogen can be supplied at low cost to fuel cells for local installation, for factory use, or for domestic use without generating carbon monoxide which poisons electrodes of fuel cells. The produced hydrogen is not only used in fuel cells but also widely used in hydrogen supply means such as hydrogen burner. Further, the reduced iron compound is filled with a vessel as a portable hydrogen supply cassette, which may be used as hydrogen supply means for the above-described fuel cells and so on.

Further, the present invention provides apparatus for supplying hydrogen characterized in
that it comprises a portable cassette accommodating a hydrogen producing medium therein and providing with at least two means for mounting pipings:
the hydrogen producing medium comprises iron or iron oxide as main element and metal of the platinum group, or metal of the platinum group and metal of the above-described second metal, added thereto;
the cassette is capable of being added with water or steam through one of the piping mounting means, and is capable of supplying hydrogen generated by decomposing water to hydrogen consuming device through the other piping mounting means.

Heater may be disposed within the cassette. Further, the cassette may be provided with pipings for supplying inert gas or air. The air is supplied when heat of the reaction generated by reaction between air and reduced metal oxide is used upon water decomposing reaction.

Iron oxidized by reaction with water is reduced again by hydrogen and can be repeatedly used as oxidation and reduction medium without decreasing its activities.

It is guessed that the reasons for achieving the above-described advantages reside in prevention of sintering, promotion of diffusion rate of oxygen in solid body, increase of water decomposing activities at surface, and so on.

Especially, when metal of platinum group is added as in the present invention, there is a tendency that reaction rate of reduction and reaction rate of oxidation increase remarkably.

### BRIEF DESCRIPTION OF THE DRAWINGS

The present invention will now be explained in detail with reference to the attached drawings which illustrate some embodiments of the present invention, wherein:
Fig. 1 is a schematic view showing the reaction system of iron compound which has been used in the embodiment of the present invention;
Fig. 2 is a diagram showing the relationship between hydrogen producing rate and reaction temperature upon decomposing water;
Fig. 3 is a diagram showing the total amount of produced hydrogen;
Fig. 4 is a view showing the construction of the present invention wherein the reaction vessel accommodating hydrogen producing medium and device for supplying water are connected by means of pipings; and
Fig. 5 is a view showing the condition wherein a cassette accommodating hydrogen producing medium which has been reduced is connected to fuel cells.

### BEST MODE FOR CARRYING OUT THE INVENTION

### [Embodiment 1]

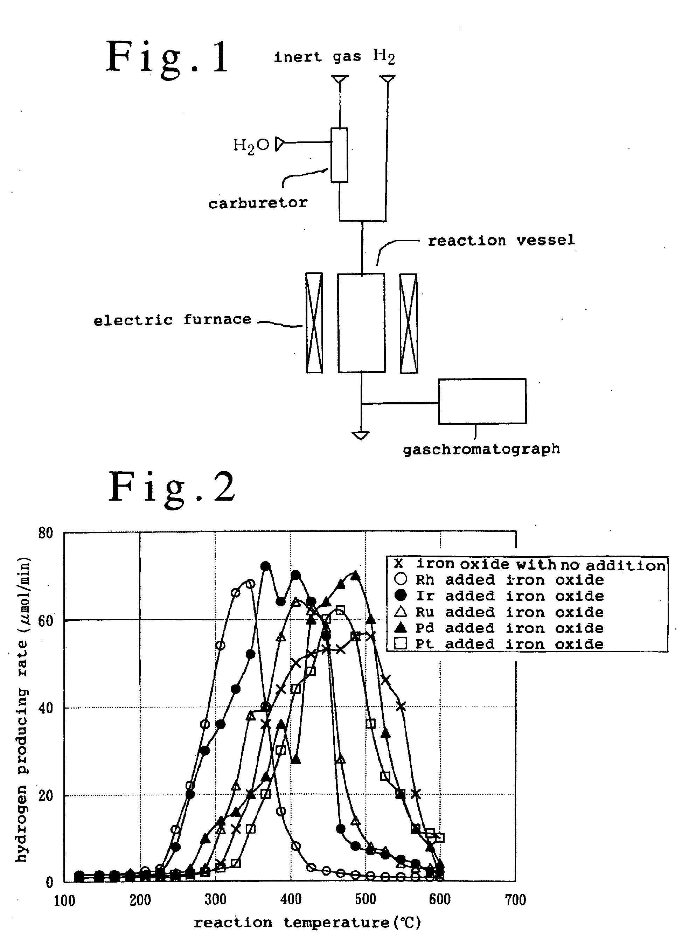

A schematic view showing the reaction system of iron compound which has been used in the present embodiment is illustrated in Fig. 1. The device illustrated in Fig. 1 is a reaction device of non-pressure fixed bed circulation type, and a part of reaction gas was collected and was measured by means of gaschromatograph.

Iron compound accommodated in the reaction vessel was prepared in accordance with the following coprecipitation method, i.e., urea method. More specifically, in 5 liter of water, which had been deaired for 5 minutes by means of ultra sonic, 0.194 mol of iron nitrate (III) 9-hydrate (Fe(NO₃)₃·9H₂O: manufactured by Wako Pure Chemical Industries, Ltd.), 0.006 mol of rhodium chloride (RhCl₃·3H₂O: manufactured by Wako Pure Chemical Industries, Ltd.) as chloride of metal of the platinum group to be added, and 10 mol of urea (NH₂(CO)NH₂: manufactured by Wako Pure Chemical Industries, Ltd.) as precipitant were added and were solved. While the mixed solution was stirred, it was heated at a temperature of 90 °C and was maintained at the same temperature for 3 hours. After completion of reaction, it was left for 16 hours and was precipitated, and then it was filtered by suction. The preciptation was dried for 24 hours at 80 °C. Thereafter, it was burned in air for 5 hours at 100 °C , 5 hours at 300 °C , and 10 hours at 500 °C . The atoms of the platinum group to be added in the sample was set to be 3 mol of all the metallic atoms in the sample. The sample was pulverized into granule condition in a mortar after it was burned, and it was used in the experiments.

First the sample was put into the reaction vessel, and after air in the system was purged by argon, i.e., inert gas, hydrogen was introduced, and it was heated from 290 °C to 550 °C at an increasing rate of 7.5 °C per minute and was reduced while it was maintained at 550 °C until consumption of hydrogen disappeared.

After completion of reducing reaction by means of hydrogen, argon was introduced into the device so that hydrogen remaining within the vessel was exhausted. Thereafter, water was vaporized at a rate of 3.6 X 10⁻³ mL/min, i.e., 200 µmol/min, by means of a carburetor, and vaporized water and argon gas which was used as a carrier gas was introduced into the reaction vessel so as to effect decomposing reaction of water. In this case, the reaction vessel was heated from 120 °C to 600 °C at an increasing rate of 4 °C per minute.

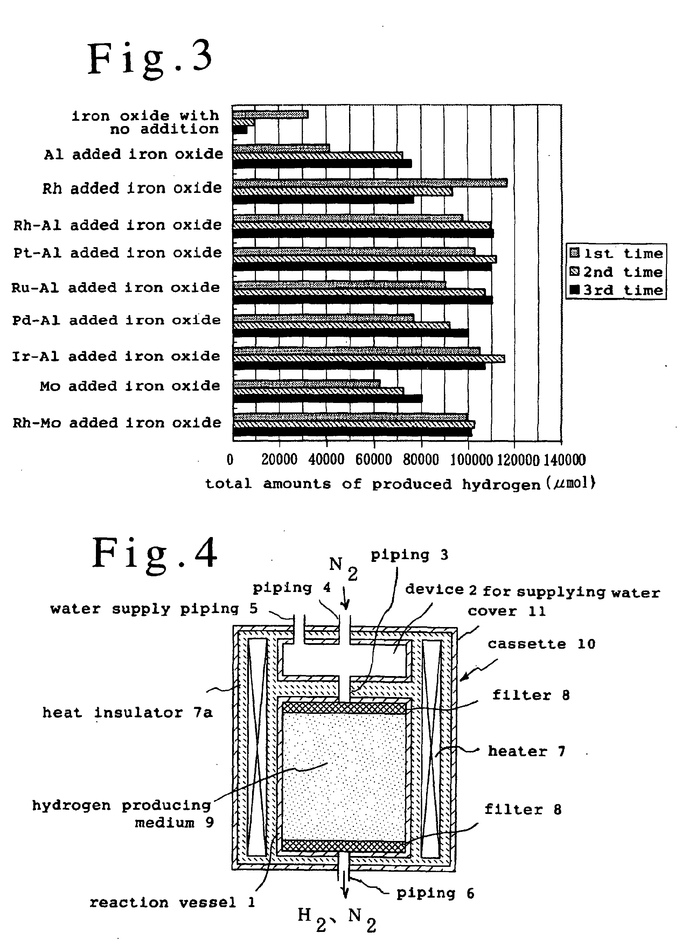

Fig. 2 is a diagram showing the results of the water decomposing reaction, i.e., relationship between reaction temperature and hydrogen producing rate, obtained through the above-described reaction wherein the sample prepared by the above-described coprecipitation method, i.e., urea method, was used after it was so measured that the Fe content was 0.2 g. With respect to Ir, Ru, Pd and Pt belonging to the platinum group in addition to Rh, samples were similarly prepared in the coprecipitation method, and water decomposing reactions were measured similarly to the above-described Rh.

As it is shown in Fig. 2, iron oxide with no addition (X symbol) scarcely generates hydrogen at a temperature lower than 300 °C , and its hydrogen producing rate shows maximum at a temperature of 500 °C . Contrary to this, with respect to iron oxide with Rh added thereto (○ symbol), a sufficient generation of hydrogen can be confirmed even at a low temperature below 300 °C , and its hydrogen producing rate shows a peak at a temperature of about 350 °C. With respect to iron oxide with Ir added thereto (● symbol), like the iron oxide with Rh added thereto, a sufficient generation of hydrogen can be confirmed even at a low temperature below 300 °C, and its hydrogen producing rate shows a peak at a temperature between of about 350 and 400 °C. Iron oxide with Ru added thereto (Δ symbol) has a peak of hydrogen producing rate at about 400 °C, and its hydrogen producing rate exceeds the maximum of the iron oxide with no addition even at a temperature lower than 400 °C. Iron oxide with Pd added thereto (▲ symbol) has a peak of hydrogen producing rate at about 500 °C, and its hydrogen producing rate already exceeds the maximum of the iron oxide with no addition at a temperature of about 400 °C. Iron oxide with Pt added thereto (□ symbol) has a peak of hydrogen producing rate at a temperature lower than 500 °C, and its hydrogen producing rate already exceeds the maximum of the iron oxide with no addition at a temperature of about 450 °C.

As described above, in the diagram shown in Fig. 2, any iron oxides with metal of the platinum group added thereto show their peaks of hydrogen producing rate at a temperature lower than that of the peak for the iron oxide with no addition and the numerical value of their peaks are higher than that of the peak for the iron oxide with no addition. From the results, it is confirmed that hydrogen can be generated at a low temperature, in other words, there is an advantage that hydrogen producing rate by decomposing water at a low temperature is enhanced, when metal belonging to the platinum group is added to iron oxide.

### [Embodiment 2]

In Embodiment 2, like in Embodiment 1, the reaction device of non-pressure fixed bed circulation type illustrated in Fig. 1 was used, and a part of reaction gas was collected and was measured by means of gaschromatograph.

Iron compound accommodated in the reaction vessel was prepared in accordance with the following coprecipitation method, i.e., urea method. More specifically, in 5 liter of water, which had been deaired for 5 minutes by means of ultra sonic, 0.188 mol of iron nitrate (III) 9-hydrate (Fe(NO₃)₃·9H₂O: manufactured by Wako Pure Chemical Industries, Ltd.), 0.006 mol of rhodium chloride (RhCl₃·3H₂O: manufactured by Wako Pure Chemical Industries, Ltd.) as chloride of metal of the platinum group to be added, 0.006 mol of aluminum nitrate (Al(NO₃)₃·9H₂O: manufactured by Wako Pure Chemical Industries, Ltd.) as chloride of the second metal to be added, and 10 mol of urea (NH₂(CO)NH₂: manufactured by Wako Pure Chemical Industries, Ltd.) as precipitant were added and were solved. While the mixed solution was stirred, it was heated at a temperature of 90 °C and was maintained at the same temperature for 3 hours. After completion of reaction, it was left for 16 hours and was precipitated, and then it was filtered by suction. The preciptation was dried for 24 hours at 80 °C. Thereafter, it was burned in air for 5 hours at 100 °C, 5 hours at 300 °C, and 10 hours at 500 °C. Each of the atoms of the platinum group to be added and the atoms of the second metal to be added in the sample was set to be 3 mol of all the metallic atoms in the sample. The sample was pulverized in a mortar after it was burned, and it was shaped in a pellet.

First the sample was put into the reaction vessel, and after air in the system was purged by argon, i.e., inert gas, hydrogen was introduced, and the sample was heated at 470 °C for one hour and was reduced.

After completion of reducing reaction by means of hydrogen, nitrogen was introduced into the device so that hydrogen remaining within the vessel was exhausted. Thereafter, the reaction vessel was heated at a temperature of 300 °C, and water was vaporized at a rate of 0.1 mL/min, i.e., 5,556µ mol/min, by means of a carburetor, and vaporized water and nitrogen gas which was used as a carrier gas were introduced into the reaction vessel so as to effect decomposing reaction of water.

After completion of the above-described water decomposing reaction, reducing reaction was again took place, and thus, the water decomposing reaction was repeated for three times.

Fig. 3 is a diagram showing the comparison of the total amounts of hydrogen produced by the above-described methods wherein the samples which had been prepared in accordance with the coprecipitation method, i.e., urea method, were measured so that the total Fe content became 4.0 g. With respect to the combination of Pt, Ru, Pd and Ir belonging to the platinum group and Al, the combination of Rh and Mo, and addition of Al and Mo, in addition to the combination of Rh and Al, samples were similarly prepared in the coprecipitation method, and their total amounts of the produced hydrogen were measured similarly to the above-described Rh.

As it is shown in Fig. 3, iron oxide having Rh solely added thereto generates well more hydrogen compared to iron oxide with no addition, and its amounts of hydrogen generated at the first stage and the second stage are bigger than that by iron oxides having Al or Mo solely added thereto, and even at the third stage, its amount of generated hydrogen is almost the same order.

Further, iron oxide having Al added thereto as the second metal in addition to Rh, i.e., Rh-Al added iron oxide, generates well more hydrogen compared to iron oxide with no addition, and its amounts of generated hydrogen are bigger than that by iron oxides having Al or Mo solely added thereto, and degradation by repetition is not observed. In addition, as is shown in Fig. 3, with respect to Pt-Al added iron oxide, Ru-Al added iron oxide, Pd-Al added iron oxide, Rh-Mo added iron oxide,and Rh-Al added iron oxide show similar tendencies.

From the results, it is confirmed that the platinum group (Rh, Ir, Ru, Pd, Pt and Os) which is the first metal contributes to increase the hydrogen producing efficiency, and at the same time, achieves the advantage to proceed the reducing reaction. In this embodiment, when reduction takes place while the reducing conditions are kept constant, amount of reduced iron oxide can be guessed from the amount of the generated hydrogen, i.e., the oxidized amount, and the difference in the reducing rates can be guessed thereby.

Al or Mo which is the second metal to be added contributes not only to increase the hydrogen producing efficiency, but also to achieve effect for avoiding the degradation by repetition. Al or Mo is preferable for the second added metal, and Ti, Zr, V, Nb, Cr, Ga, Mg, Sc, Ni, or Cu may also be used.

Therefore, when metal added to iron may be only the first one belonging to the platinum group, the first metal contributes to increase the hydrogen producing efficiency, and hydrogen can be stably generated. Further, by addition of the second metal, activity for water decomposing reaction can be maintained for repeated times, even if the water decomposing and reducing reactions are repeated.

### [Mode for Industrially Carrying out the Invention]

The mode for industrially carrying our the present invention is illustrated in Fig. 4. Fig. 4 is a schematic view of one embodiment of a system, wherein a reaction vessel 1 accommodating hydrogen producing medium 9 of the present invention and a device 2 for supplying water are connected by means of pipings, so that they are constructed as a cassette 10 for supplying hydrogen.

The hydrogen producing medium 9 is metal added iron oxide of the present invention, and it comprises iron or iron oxide as main element and at least one metal of Rh, Ir, Ru, Pd, Pt and Os added thereto, or it comprises iron or iron oxide as main element, at least one metal of Rh, Ir, Ru, Pd, Pt and Os added thereto and at least one metal of Ti, Zr, V, Nb, Cr, Mo, Al, Ga, Mg, Sc, Ni and Cu added thereto.

The reaction vessel 1 for performing water decomposing and reducing reactions is connected to the device 2 for supplying water by means of a piping 3, and the device 2 for supplying water is connected to a piping 4 for introducing inert gas or air. The inert gas may be for example, nitrogen, argon or helium. Nitrogen (inert gas) is used as carrier gas for performing the reaction smoothly or for purging air (oxygen) in the system, but it is not always necessary. Air is used when the heat generated upon reaction between air and reduced iron oxide is used to the water decomposing reaction upon water decomposing reaction, but it is not always necessary. In place of air, oxygen or inert gas containing oxygen may be used. Piping 5 may be connected to the cassette 10 so that the water supply device in the cassette 10 can be supplemented with water from the outside of the cassette 10.

The reaction vessel 1 is connected to piping 6 for exhausting hydrogen or steam, and it feeds hydrogen generated by water decomposing reaction to a system which needs hydrogen, such as polymer electrolyte fuel cells. A heater 7 is disposed within the cassette 10 as a heat source for supplying heat for water decomposing reaction and reducing reaction. The heat source may be any of an electric furnace, a heater, induction heating, catalytic combustion heating, heating by chemical reaction. The reaction vessel 1 is made of metal such as stainless steel or aluminum, ceramics such as alumina or zirconia, or heat resisting plastics such as phenol or poly phenylene sulfide, and has a construction resistant to heat and inside and outside pressure.

The cassette 10 has heat insulator 7a such as silica fiber inserted thereinto and is covered by cover 11. Filters 8 are disposed at the gas inlet and outlet of the cassette 10.

Further, although the cassette 10 has water supplying device disposed therein in the embodiment illustrated in Fig. 4, water may be directly supplied into the reaction vessel 1 from the water supply piping 5 without disposing such a device. When nitrogen is not used for water decomposing reaction, the water supply piping 5 may be omitted, and water may be supplied from the piping 4. Further, although the heater 7 is disposed in the cassette 10 in this embodiment, the heater may not be disposed in the cassette and may be disposed separately.

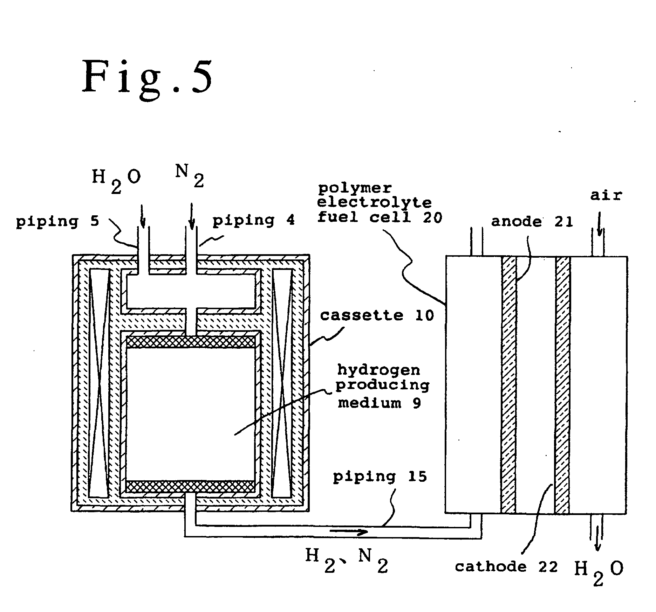

Fig. 5 is a view showing the condition wherein a cassette 10 accommodating hydrogen producing medium which has been reduced is connected to fuel cells 20. The reduced hydrogen producing medium reacts with water and produces hydrogen from the cassette 10. The produced hydrogen is supplied to anode 21 of polymer electrolyte fuel cell through piping 15 which is connected to the polymer electrolyte fuel cell. Air is introduced to the cathode 22 of polymer electrolyte fuel cell, and electric power is taken out through the reaction between hydrogen and oxygen in the air.

### INDUSTRIAL APPLICABILITY

According to the present invention, in a method for producing hydrogen wherein water, steam or gas containing steam is contacted with iron or iron oxide, since metal of the platinum group is added to the iron or iron oxide, hydrogen can be produced at a low temperature, and hydrogen producing rate is high. In addition, the total hydrogen producing amount at a certain temperature can be large.

Further, according to the present invention, since metal of the platinum group and the above-described second metal are added to the iron or iron oxide, the total hydrogen producing amount can be large, and the total hydrogen producing amount remain at high level even after water decomposing reaction and reducing reaction are repeated, since their activities are not degraded. Accordingly, the oxidizing and reducing medium, which has already produce hydrogen, can be recycled if it is reduced again after it produces hydrogen.

According to the present invention, since the hydrogen producing reaction rate and the total hydrogen producing amount per unit weight are increased, hydrogen can be remarkably efficiently supplied wit the systems such as polymer electrolyte fuel cells which need hydrogen.

Although the metals which are added in the present invention are expensive except for iron, hydrogen can be produced at low cost, since small amount of such metals, i.e., between 0.1 and 30 mol %, is sufficient for increasing the reaction efficiency.

Further, the gas generated from the cassette is pure hydrogen and steam and no impurities are contained, and accordingly, electrodes of fuel cells of low temperature use type, such as polymer electrolyte fuel cells, phosphoric acid type fuel cells, or KOH type fuel cells, are not poisoned, and no device for decreasing CO is necessary, and therefore, since the system can be a simple construction, and economical advantages are very large.

## Claims

1. A method for producing hydrogen by contacting water, steam or gas containing steam with iron or iron oxide, wherein the iron or iron oxide is added with at least one first metal of Rh, Ir, Ru, Pd, Pt and Os and at least one second metal of Ti, Zr, V, Nb, Cr, Mo, Al, Ga, Mg, Sc, Ni and Cu, and the amount of the added first metal and the amount of the added second metal added to iron or iron oxide, measured in molarity of the metallic atom, are between 0.1 and 30 mol % of all the metallic atoms, respectively.

2. A method for producing hydrogen by contacting water, steam or gas containing steam with iron or iron oxide, wherein the iron or iron oxide is added with at least one metal of Rh, Ir, Ru, Pd, Pt and Os and at least one metal of Ti, Zr, Nb, Cr, Al, Ga, Mg, Sc and Cu.

3. A method for producing hydrogen according to claim 1 or 2, wherein the addition of metal is done by means of coprecipitation method.

4. Apparatus for supplying hydrogen **characterized in**
**that** it comprises a portable cassette accommodating a hydrogen producing medium therein and providing with at least two means for mounting pipings:
the hydrogen producing medium comprises iron or iron oxide as main element and at least one first metal of Rh, Ir, Ru, Pd, Pt and Os added thereto and at least one second metal of Ti, Zr, V, Nb, Cr, Mo, Al, Ga, Mg, Sc, Ni and Cu added thereto;
the amount of the added first metal and the amount of the added second metal added to iron or iron oxide, measured in molarity of the metallic atom, are between 0.1 and 30 mol % of all the metallic atoms, respectively; and
the cassette is capable of being added with water or steam through one of the piping mounting means, and is capable of supplying hydrogen generated by decomposing water to hydrogen consuming device through the other piping mounting means.

5. Apparatus for supplying hydrogen **characterized in that** it comprises a portable cassette accommodating a hydrogen producing medium therein and providing with at least two means for mounting pipings:
the hydrogen producing medium comprises iron or iron oxide as main element and at least one metal of Rh, Ir, Ru, Pd, Pt and Os and at least one metal of Ti, Zr, Nb, Cr, Al, Ga, Mg, Sc and Cu added thereto;
the cassette is capable of being added with water or steam through one of the piping mounting means, and is capable of supplying hydrogen generated by decomposing water to hydrogen consuming device through the other piping mounting means.
